# FASCICULE DE BREVET EUROPEEN

(11) **EP 3 494 803 B1**
(45) Date de publication et mention de la délivrance du brevet: **12.08.2020**
(21) Numéro de dépôt: 18209905.1
(22) Date de dépôt: 03.12.2018
(51) Int. Cl.: A23N 15/02

(54) **MACHINE À ÉGRAPPER LE RAISIN ENCORE APPELÉE ÉGRAPPOIR**
MASCHINE ZUM ENTRAPPEN VON TRAUBEN
MACHINE FOR DESTEMMING GRAPES

(30) Priorité: 08.12.2017 FR 1761844
(43) Date de publication de la demande: 12.06.2019
(73) Titulaire: Bucher Vaslin, 49290 Chalonnes sur Loire (FR)
(72) Inventeur: ESPIAU, Pascal, 66510 SAINT HIPPOLYTE (FR); DOBROWOLSKI, Eric, 49380 CHAVAGNES LES EAUX (FR); NOILET, Pascal, 49000 ANGERS (FR)
(74) Mandataire: Godineau, Valérie

(56) Documents cités:
- WO-A2-2009/034195
- CN-A- 106 072 720
- FR-A1- 2 840 775
- FR-A2- 2 669 193

## Description

### DOMAINE DE L'INVENTION

L'invention concerne une machine à égrapper le raisin encore appelée égrappoir.

Elle concerne plus particulièrement une machine à égrapper le raisin comprenant un bâti, une cage à paroi perforée dont les perforations sont aptes à laisser passer les baies de raisin et à retenir au moins une partie des rafles, et un arbre à pointes, ladite cage étant une cage rotative se présentant sous forme d'un corps creux allongé monté à rotation autour d'un axe longitudinal dudit corps, cette cage présentant une extrémité ouverte formant l'ouverture d'admission du raisin à l'intérieur de la cage et une ouverture, dite de sortie des rafles égrappées, ménagée à l'extrémité opposée de la cage, et l'arbre à pointes étant un arbre rotatif disposé à l'intérieur de la cage, de manière coaxiale ou parallèle à l'axe de rotation de la cage.

### ART ANTERIEUR

Une machine à égrapper le raisin du type précité est connue comme l'illustre le brevet FR2680450 ou les documents WO 2009/034195 et CN 106 072 720. Il convient en effet de rappeler que l'éraflage ou l'égrappage consiste à séparer les baies de raisin ou analogue de la charpente des grappes (les rafles). Cette opération s'effectue généralement dans une machine constituée d'un arbre à pointes tournant dans une cage perforée, la dimension des perforations ou trous de la cage étant en relation avec la dimension des baies de raisin. Idéalement, à l'aide d'une telle machine, les baies sortant de la machine doivent être exemptes de rafles tandis que les rafles quittant la machine ne doivent plus porter de baies. En outre, il est de plus en plus demandé que les baies séparées soient le moins possible blessées ou éclatées.

### BUTS ET RESUME

Un but de l'invention est de proposer une machine à égrapper le raisin dont la conception permet de limiter la trituration de la vendange et de préserver au mieux l'intégrité des baies tout en maintenant un niveau élevé de qualité de l'égrappage.

A cet effet, l'invention a pour objet une machine à égrapper le raisin comprenant un bâti de machine, une cage à paroi perforée sur au moins une partie de sa longueur avec les perforations de la paroi aptes à laisser passer les baies de raisin et à retenir au moins une partie des rafles, et un arbre à pointes, ladite cage étant une cage rotative se présentant sous forme d'un corps creux allongé monté à rotation autour d'un axe longitudinal dudit corps, cette cage présentant une extrémité ouverte formant l'ouverture d'admission de raisin à l'intérieur de la cage et une ouverture dite de sortie des rafles égrappées ménagée à l'extrémité opposée de la cage, et l'arbre à pointes étant un arbre rotatif disposé à l'intérieur de la cage, de manière coaxiale ou parallèle à l'axe de rotation de la cage, caractérisée en ce que l'arbre à pointes présente, depuis son extrémité disposée côté ouverture d'admission de raisin de la cage vers son extrémité disposée côté ouverture de sortie des rafles de la cage, au moins une zone sans pointes suivie d'une zone avec pointes, et en ce que la cage est équipée intérieurement de déflecteurs solidaires en déplacement de la paroi perforée de délimitation partielle de la cage, au moins une partie desdits déflecteurs étant disposée autour de la zone sans pointes de l'arbre à pointes.

La présence sur l'arbre à pointes, côté ouverture d'admission de raisin à l'intérieur de la cage, d'une zone exempte de pointes en regard des déflecteurs aptes à permettre l'avance du raisin à l'intérieur de la cage permet de limiter l'éclatement des baies lors de la mise en vitesse à l'entrée de la cage. Il en résulte une réduction de la production de jus libres.

Selon un mode de réalisation de l'invention, la paroi perforée de la cage entourant la zone avec pointes de l'arbre à pointes est dépourvue intérieurement de déflecteurs ou de parties en saillie aptes à former un moyen d'entraînement en déplacement du raisin. Ainsi, les déflecteurs ne perturbent pas le fonctionnement des pointes de l'arbre à pointes, les extrémités libres de ces pointes de l'arbre pouvant être disposées très proches de la paroi perforée de la cage.

Selon un mode de réalisation de l'invention, la cage à paroi perforée sur au moins une partie de sa longueur est dépourvue de perforations dans la zone sans pointes. Cette absence de perforations de la cage dans la zone sans pointes permet d'éviter une contrainte de cisaillement qui tend à ralentir l'accélération des fruits dans ladite zone.

Selon un mode de réalisation de l'invention, les pointes de l'arbre à pointes sont disposées en hélice sur l'arbre et présentent de préférence, une extrémité libre aplatie. Les extrémités libres des pointes constituent ainsi un moyen d'entrainement en déplacement du raisin le long de la cage.

De préférence, l'hélice formée par les pointes de l'arbre à pointes présente un pas qui diminue depuis l'extrémité de l'arbre à pointes disposée côté ouverture d'admission du raisin de la cage en direction de son autre extrémité disposée côté sortie des rafles de la cage. La réduction du pas de l'hélice avec l'avancement de la vendange dans la cage permet d'augmenter la vitesse linéaire des rafles à l'intérieur de la cage, près de la sortie des rafles de la cage favorisant ainsi l'évacuation des rafles.

Selon un mode de réalisation de l'invention, la cage et l'arbre à pointes sont équipés d'un dispositif d'entrainement en rotation individuel et lesdits dispositifs d'entrainement en rotation sont configurés pour permettre un entrainement en rotation de l'arbre à pointes à une vitesse supérieure à la vitesse de rotation de la cage.

Il est ainsi possible d'entrainer en rotation la cage et l'arbre à pointes dans le même sens ou dans des sens différents et de disposer de plages de réglage de vitesse importantes pour permettre le traitement de petites quantités de raisin et/ou de réduire les vitesses de fonctionnement dans le cas de raisin particulièrement sensible ou malade.

Selon un mode de réalisation de l'invention, la machine à égrapper le raisin comprend, côté ouverture d'admission de raisin de la cage, un dispositif de chargement de raisin dans ladite cage.

Selon un mode de réalisation de l'invention, le dispositif de chargement de raisin dans la cage comprend une trémie ouverte par le dessus, ladite trémie présentant deux flancs formant un V entre eux, lesdits flancs étant, en configuration d'utilisation de la machine, disposés de part et d'autre d'un plan vertical passant par l'axe de rotation de la cage, en ce que le déplacement de chaque déflecteur est, au cours de la rotation de la cage sur un tour, divisé en un déplacement descendant à l'intérieur d'un premier secteur angulaire puis un déplacement ascendant à l'intérieur d'un deuxième secteur angulaire, et en ce que l'un des flancs de la paire de flancs en V, disposé côté deuxième secteur angulaire, présente une pente supérieure à l'autre des flancs de la paire de flancs en V disposé côté premier secteur angulaire, le débouché de la trémie dans l'ouverture d'admission de raisin de la cage étant ménagé dans un flanc de la trémie reliant lesdits flancs en V entre eux.

La conception du dispositif de chargement de raisin permet une mise en mouvement du raisin tenant compte du sens de rotation de la cage avant introduction du raisin dans la cage. Il en résulte à nouveau une moindre trituration du raisin. Le raisin est ainsi guidé en déplacement avant introduction dans la cage et peut être introduit en mouvement notamment dans la zone où le déflecteur passe d'un mouvement descendant à un mouvement ascendant. Selon un mode de réalisation de l'invention, la paroi perforée de la cage est munie extérieurement d'un enroulement hélicoïdal formant une hélice apte à entrainer en déplacement les baies de raisin issues de la cage vers l'ouverture d'admission de raisin de la cage.

Les baies sont ainsi ramenées en direction de l'entrée de la cage pour permettre un traitement des baies sous la cage en un emplacement déterminé.

Selon un mode de réalisation de l'invention, le bâti, qui entoure au moins partiellement la cage, forme, à l'aplomb et au-dessous de la cage, un fond de réception des baies de raisin, une ouverture de déchargement des baies de raisin à l'extérieur du bâti étant ménagée dans ledit fond.

Selon un mode de réalisation de l'invention, l'ouverture de déchargement des baies de raisin à l'extérieur du bâti est réglable en dimension. Il est ainsi possible de laisser passer les baies sur une plus grande surface et de disposer sous la cage différents types de machines de traitement des baies en fonction du souhait de l'utilisateur.

Selon un mode de réalisation de l'invention, l'ouverture de sortie des rafles de la cage, disposée à l'extrémité de la cage opposée à celle munie de l'ouverture d'admission du raisin à l'intérieur de la cage, débouche dans une chambre ménagée par le bâti, cette chambre étant munie d'une ouverture de déchargement des rafles.

### BREVE DESCRIPTION DES DESSINS

L'invention sera bien comprise à la lecture de la description suivante d'exemples de réalisation, en référence aux dessins annexés dans lesquels :

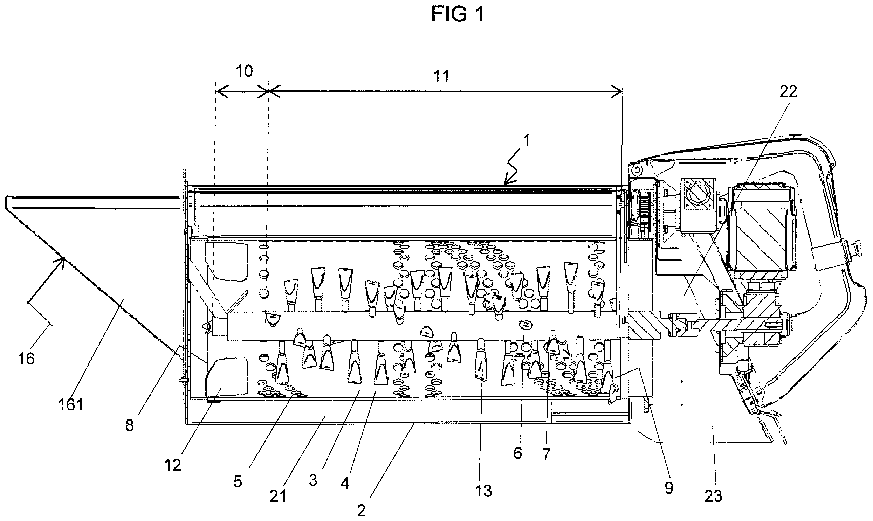

La figure 1 représente une vue de face en transparence d'une machine conforme à l'invention ;
La figure 2 représente une vue en perspective d'une cage seule prise côté ouverture d'admission de raisin à l'intérieur de la cage ;
La figure 3 représente une vue en perspective d'une cage seule prise côté ouverture de sortie des rafles égrappées ;

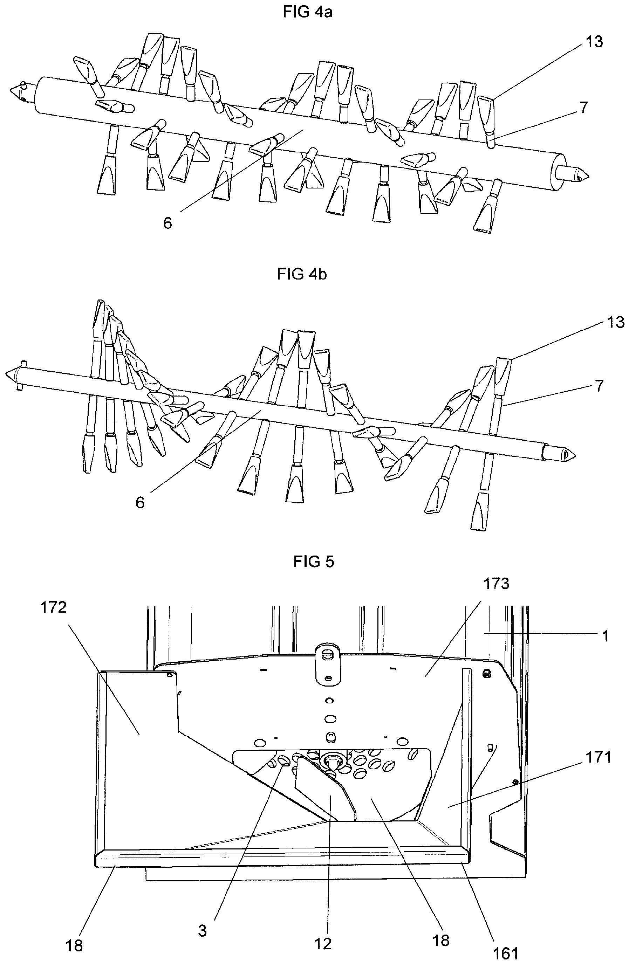

La figure 4a représente une vue en perspective d'un arbre à pointes ;
La figure 4b représente une vue en perspective d'un autre mode de réalisation d'un arbre à pointes ;
La figure 5 représente une vue partielle en perspective de la machine prise côté ouverture d'admission de raisin à l'intérieur de la cage ;

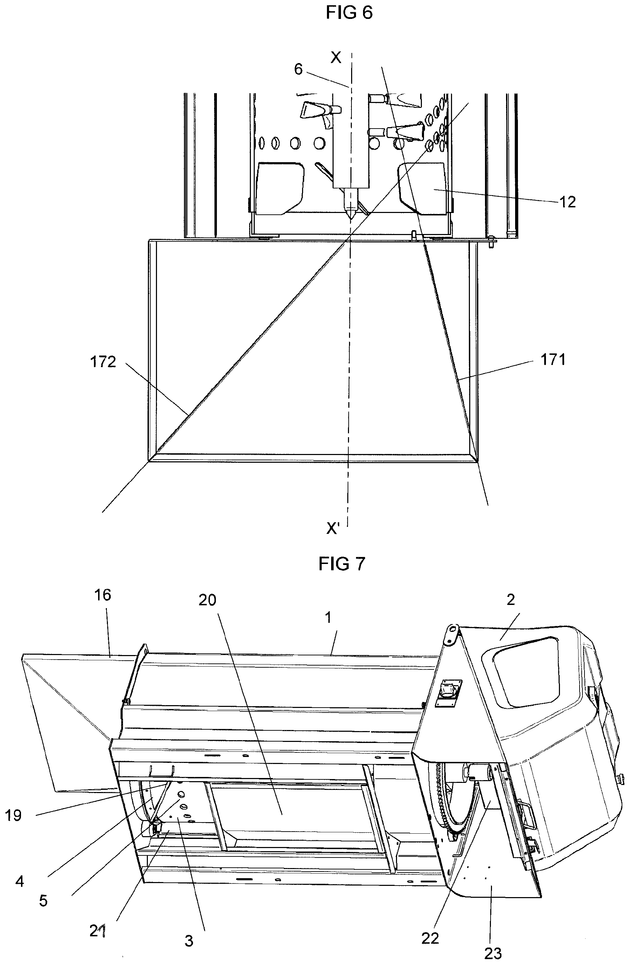

La figure 6 représente une vue partielle de dessus de la machine prise côté ouverture d'admission de raisin à l'intérieur de la cage ;
La figure 7 représente une vue de dessous de la machine avec une première dimension de l'ouverture de déchargement des baies ;

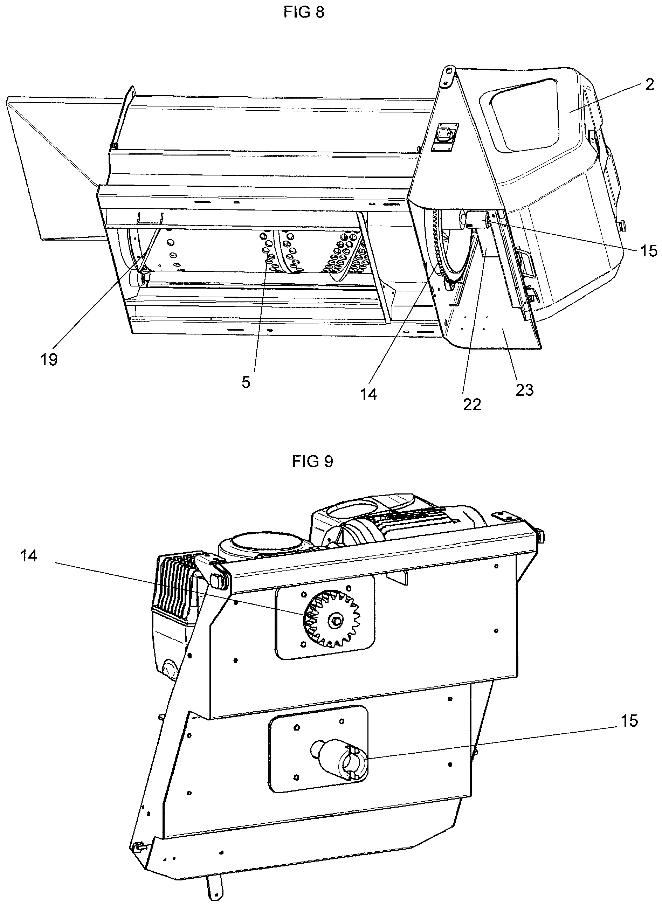

La figure 8 représente une vue de dessous de la machine avec une deuxième dimension de l'ouverture de déchargement des baies et ;
La figure 9 représente une vue partielle des dispositifs d'entrainement en rotation de la cage et de l'arbre à pointes.

### DESCRIPTION DETAILLEE

Comme mentionné ci-dessus, l'invention concerne une machine 1 à égrapper le raisin ou similaire. Cette machine 1 comprend un bâti 2 à l'intérieur duquel est montée rotative une cage 3 d'égrappage. Cette cage 3 est une cage cylindrique de section circulaire à paroi 4 de délimitation du cylindre, perforée sur au moins une partie de sa longueur. Les perforations 5 de la cage 3 sont adaptées pour le passage des baies. En particulier, les perforations 5 sont configurées, c'est-à-dire conformées et dimensionnées pour le passage des baies. La cage 3 peut être réalisée en polyéthylène haute densité. Les perforations peuvent être délimitées par des pourtours arrondis. Une telle cage 3, bien connue à ceux versés dans cet art, peut être, au niveau des perforations, réalisée de manière similaire à ce qui est décrit dans le brevet français FR-2.837.358. Les dimensions des perforations peuvent être identiques ou différentes d'une extrémité à l'autre de la cage. Ainsi, par exemple, la dimension des perforations 5 peut varier dans le sens d'une réduction depuis une extrémité en direction de l'autre extrémité de la cage 3. Cette cage 3 cylindrique se présente donc sous forme d'un corps creux allongé monté à rotation autour d'un axe XX' longitudinal du corps correspondant à l'axe longitudinal du cylindre.

Dans les exemples représentés, cette cage 3 est ouverte à chacune de ses extrémités. L'une des extrémités ouvertes de la cage 3 forme l'ouverture 8 d'admission de raisin dans la cage 3 tandis que l'extrémité ouverte opposée de la cage 3 forme l'ouverture 9 de sortie des rafles égrappées.

La cage est une cage 3 à axe de rotation dit horizontal. En effet, l'axe de rotation XX' de rotation de la cage 3 est un axe dit horizontal qui forme, avec le plan passant par la surface d'appui au sol de la machine, un angle compris entre 0 et 45°.

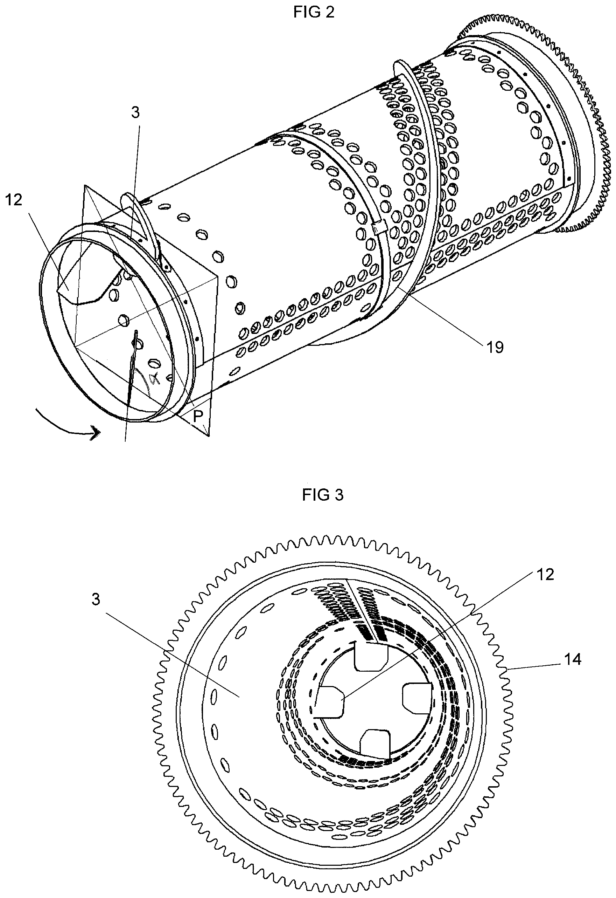

Pour l'entraînement en rotation de la cage 3 autour de l'axe XX', la machine 1 comprend un dispositif 14 d'entraînement en rotation. Ce dispositif 14 d'entraînement en rotation comprend par exemple, comme représenté, un moteur disposé sur le bâti 2 de la machine dans le prolongement de la cage côté ouverture 9 de sortie des rafles. L'arbre de ce moteur est équipé d'un pignon qui vient en prise avec une denture périphérique externe de la cage 3, cette denture étant représentée à la figure 3. L'entraînement s'opère donc pas engrènement. La rotation et le sens de rotation de la cage sont choisis par l'opérateur via une unité de pilotage du moteur intégrée au bâti ou déportée.

La machine 1 comprend encore un arbre 6 à pointes 7, encore appelé arbre hérisson, cet arbre 6 étant disposé à l'intérieur de la cage 3. Cet arbre 6 à pointes est un arbre rotatif monté à rotation autour d'un axe confondu ou parallèle à l'axe XX' longitudinal de rotation de la cage 3. Ainsi, l'axe de l'arbre peut être désaxé de 20 mm vers le bas par rapport à l'axe de la cage.

Pour l'entraînement à rotation de l'arbre 6 à pointes 7, la machine 1 comprend un dispositif 15 d'entrainement en rotation comprenant un moteur disposé sur le bâti 2 de la machine dans le prolongement de la cage, côté ouverture de sortie des rafles. L'arbre de ce moteur est ici un arbre creux qui vient en prise par emboîtement avec une extrémité de l'arbre 6 à pointes. A nouveau, le sens et la vitesse de rotation de l'arbre 6 à pointes sont choisis par l'opérateur via une unité de pilotage du moteur intégrée au bâti ou déportée. Ainsi, la cage et l'arbre 6 à pointes peuvent être entraînés en rotation dans le même sens ou de manière contrarotative et à des vitesses fonction du choix de l'opérateur, étant entendu que l'arbre 6 à pointes 7 tourne à une vitesse supérieure à la vitesse de rotation de la cage 3. Généralement la vitesse de rotation de la cage est comprise entre 15 et 36 Tr/min tandis que la vitesse de rotation de l'arbre 6 à pointes est comprise entre 150 et 360 Tr/min.

En pratique, le rapport de vitesse entre la cage et l'arbre peut être paramétré électroniquement selon le cépage et/ou le débit souhaités puis l'opérateur peut faire varier proportionnellement les deux vitesses à l'aide d'un seul potentiomètre. L'opérateur dispose, dans ce cas, d'un sélecteur avec au moins un, généralement au moins trois rapports spécifiques de vitesse entre la vitesse de l'arbre à pointes et la vitesse de la cage, que l'opérateur choisit en fonction du cépage et/ou du débit souhaités. En variante, l'opérateur peut régler la vitesse de l'arbre à pointes et la vitesse de la cage de manière indépendante l'une de l'autre. L'arbre 6 à pointes 7 est bien connu à ceux versés dans cet art. Sur cet arbre 6, les pointes 7 sont disposées en hélice et peuvent présenter une extrémité 13 libre aplatie comme représenté aux figures. Chaque pointe radiale à l'arbre comporte donc une tête sous forme d'extrémité 13 libre aplatie de la pointe et un corps de liaison de l'extrémité 13 libre aplatie de la pointe à l'arbre 6. En projection dans un plan normal à l'axe longitudinal du corps de liaison de la pointe à l'arbre, chaque bord longitudinal de la face d'extrémité de l'extrémité aplatie de la pointe forme, avec l'axe de rotation de l'arbre 6 à pointes, un angle généralement voisin de 12° à + 10° près. Cet angle peut être identique ou distinct d'une pointe à une autre. Les extrémités 13 aplaties des pointes 7 participent entre elles à l'entraînement en déplacement du raisin le long de l'arbre 6 à pointes ou de la cage 3. L'angle formé par les extrémités 13 aplaties des pointes 6 est fonction de l'entraînement en déplacement souhaité. Les extrémités aplaties des pointes peuvent être réalisées d'une seule pièce avec le corps de pointe ou sous forme d'un élément rapporté sur ledit corps. Généralement, la distance entre l'extrémité de chaque pointe et la partie en regard de la paroi de la cage est comprise entre 5 et 50 mm.

De manière caractéristique à l'invention, l'arbre 6 à pointes 7 présente, depuis son extrémité disposée côté ouverture 8 d'admission de raisin de la cage 3 vers son extrémité disposée côté ouverture 9 de sortie des rafles de la cage 3, au moins une zone 10 sans pointes 7 suivie d'une zone 11 avec pointes 7 et la cage 3 est équipée intérieurement de déflecteurs 12 solidaires en déplacement de la paroi 4 perforée de délimitation partielle de la cage 3, au moins une partie desdits déflecteurs 12 étant disposée autour de la zone 11 sans pointes de l'arbre 6 à pointes 7. La cage 3 peut être dépourvue ou non de perforations dans cette zone 10 sans pointes.

Dans l'exemple représenté, tous les déflecteurs 12 sont disposées autour de la zone 11 sans pointes de l'arbre 6 à pointes 7. Ces déflecteurs 12 sont ici représentés au nombre de quatre. Ces déflecteurs 12 forment un moyen d'entraînement en déplacement du raisin le long de la cage. Chaque déflecteur 12 est réalisé à l'aide d'une plaque coudée, l'une des parties de plaque s'étendant d'un côté de la ligne de pliage du coude formant la zone de liaison du déflecteur à la cage 3, l'autre partie de plaque s'étendant de l'autre côté de la ligne de pliage du coude formant la partie active du déflecteur apte à entraîner en déplacement le raisin vers le haut et vers l'ouverture 9 de sortie des rafles de la cage. La partie active de chaque déflecteur apte à permettre l'entraînement en déplacement du raisin forme, avec le plan P transversal à la cage et perpendiculaire à l'axe de rotation de la cage, un angle α voisin ici de 145° ± 10° près. Il doit être noté que la plaque constitutive du déflecteur peut être de forme simple ou complexe, en particulier concave.

Ces déflecteurs 12 sont donc disposés à l'intérieur de la cage et sont réparties sur la circonférence interne de la cage. Ces déflecteurs sont généralement disposés à équidistance l'un de l'autre. L'absence de pointes 7 au niveau de la portion de l'arbre 6 à pointes entourée par les déflecteurs 12 permet d'éviter que les pointes 7 et les déflecteurs 12 interfèrent entre eux au risque d'entraîner une trituration et un endommagement des baies de raisin.

Dans l'exemple représenté, la paroi 4 perforée de la cage 3 entourant la zone 11 avec pointes de l'arbre 6 à pointes est dépourvue intérieurement de déflecteurs 12 ou de parties en saillie aptes à former un moyen d'entraînement en déplacement du raisin de sorte que la totalité des déflecteurs 12 est disposée autour de la zone 10 sans pointes de l'arbre 6 à pointes 7.

La machine 1 comprend encore, côté ouverture 8 d'admission de raisin de la cage 3, un dispositif 16 de chargement de raisin dans ladite cage 3.

Dans l'exemple représenté, le dispositif 16 de chargement de raisin dans la cage 3 comprend une trémie 161 ouverte par le dessus. Cette trémie 161 présente deux flancs 171, 172 formant un V entre eux. Les flancs 171, 172 sont, en configuration d'utilisation de la machine 1, disposés de part et d'autre d'un plan vertical passant par l'axe XX' de rotation de la cage 3. Le déplacement de chaque déflecteur 12 est, au cours de la rotation de la cage 3 sur un tour, divisé en un déplacement descendant à l'intérieur d'un premier secteur angulaire puis un déplacement ascendant à l'intérieur d'un deuxième secteur angulaire. L'un des flancs de la paire de flancs en V, disposé côté deuxième secteur angulaire, et représenté en 171 aux figures, présente une pente supérieure à l'autre 172 des flancs de la paire de flancs en V, cet autre flanc étant disposé côté premier secteur angulaire. Le débouché 18 de la trémie 161 dans l'ouverture 8 d'admission de raisin de la cage 3 est ménagé dans un flanc 173 de la trémie 161 reliant lesdits flancs 171, 172 en V entre eux. Ce débouché est disposé au niveau de la partie inférieure de la cage 3.

Dans l'exemple représenté aux figures, l'angle formé entre le flanc 171 disposé côté deuxième secteur angulaire et la face du dessus de la trémie est égal à 75° ± 5° près tandis que l'angle formé entre le flanc 172 disposé côté premier secteur angulaire et la face du dessus de la trémie est voisin de 45° ± 5° près. Il en résulte un mouvement d'entraînement en déplacement du raisin dans la zone de chargement qui accompagne le mouvement de déplacement du raisin dans la cage.

L'ouverture 9 de sortie des rafles de la cage 3 disposée à l'extrémité de la cage 3 opposée à celle munie de l'ouverture 8 d'admission du raisin à l'intérieur de la cage 3 débouche dans une chambre 22 ménagée par le bâti 2, cette chambre 22 étant munie d'une ouverture 23 de déchargement des rafles. L'ouverture 23 de déchargement des rafles est disposée au niveau de la base de la chambre 22 de sorte que les rafles peuvent être évacuées par gravité de la chambre 22.

Enfin, le bâti 2, qui entoure au moins partiellement la cage 3, forme, à l'aplomb et au-dessous de la cage 3, un fond 20 de réception des baies de raisin, une ouverture 21 de déchargement des baies de raisin à l'extérieur du bâti 2 étant ménagée dans ledit fond 20.

Dans l'exemple représenté, la paroi 4 perforée de la cage 3 est munie extérieurement d'un enroulement 19 hélicoïdal formant une hélice apte à entrainer en déplacement les baies de raisin issues de la cage 3 vers l'ouverture 8 d'admission de raisin de la cage 3. Ainsi, le raisin est amené dans la cage 3 via la trémie 161. A l'intérieur de cette cage 3, les baies sont séparées des rafles sous l'action combinée de la cage, des déflecteurs et de l'arbre à pointes. Les baies sont évacuées de la cage à travers les perforations de la cage tandis que les rafles sont évacuées de la cage via l'ouverture 9 de sortie des rafles de la cage. Les rafles parviennent alors dans la chambre 22 de laquelle elles sont évacuées par gravité via l'ouverture 23 de déchargement des rafles équipant la chambre 22. Les baies évacuées de la cage à travers les perforations sont projetées sur le fond ou une paroi jouxtant le fond du bâti ou bien directement en direction de l'ouverture 21 de déchargement des baies ménagées dans le fond du bâti.

Dans l'exemple représenté aux figures, l'ouverture 21 de déchargement des baies s'étend à l'aplomb et au-dessous de la zone exempte de pointes de l'arbre. Les baies collectées par le fond du bâti sont amenées jusqu'à cette ouverture 21 de déchargement des baies via l'enroulement hélicoïdal 19 qui forme une hélice sur l'extérieur de la paroi 4 perforée de la cage.

Il peut être disposé une table de tri ou tout autre dispositif de collecte des baies au-dessous de cette ouverture 21 de déchargement des baies de raisin. Pour permettre une adaptation à différents types de raisins, l'ouverture 21 de déchargement des baies de raisin à l'extérieur du bâti 2 peut être réglable en dimension. A cet effet, le fond du bâti comprend, dans l'exemple représenté, une partie amovible.

## Revendications

1. Machine (1) à égrapper le raisin comprenant un bâti (2) de machine, une cage (3) à paroi (4) perforée sur au moins une partie de sa longueur avec les perforations (5) de la paroi (4) aptes à laisser passer les baies de raisin et à retenir au moins une partie des rafles, et un arbre (6) à pointes (7), ladite cage (3) étant une cage rotative se présentant sous forme d'un corps creux allongé monté à rotation autour d'un axe (XX') longitudinal dudit corps, cette cage (3) présentant une extrémité ouverte formant l'ouverture (8) d'admission de raisin à l'intérieur de la cage (3) et une ouverture (9) dite de sortie des rafles égrappées ménagée à l'extrémité opposée de la cage (3), et l'arbre (6) à pointes (7) étant un arbre rotatif disposé à l'intérieur de la cage (3), de manière coaxiale ou parallèle à l'axe (XX') de rotation de la cage (3), **caractérisée en ce que** l'arbre (6) à pointes (7) présente, depuis son extrémité disposée côté ouverture (8) d'admission de raisin de la cage (3) vers son extrémité disposée côté ouverture (9) de sortie des rafles de la cage (3), au moins une zone (10) sans pointes (7) suivie d'une zone (11) avec pointes (7), et **en ce que** la cage (3) est équipée intérieurement de déflecteurs (12) solidaires en déplacement de la paroi (4) perforée de délimitation partielle de la cage (3), au moins une partie desdits déflecteurs (12) étant disposée autour de la zone (10) sans pointes de l'arbre (6) à pointes (7).

2. Machine (1) à égrapper le raisin selon la revendication 1, **caractérisée en ce que** la paroi (4) perforée de la cage (3) entourant la zone (11) avec pointes de l'arbre (6) à pointes est dépourvue intérieurement de déflecteurs (12) ou de parties en saillie aptes à former un moyen d'entraînement en déplacement du raisin.

3. Machine (1) à égrapper le raisin selon l'une des revendications 1 ou 2, **caractérisée en ce que** les pointes (7) de l'arbre (6) à pointes (7) sont disposées en hélice sur l'arbre (6) et présentent de préférence, une extrémité (13) libre aplatie.

4. Machine (1) à égrapper le raisin selon l'une des revendications 1 à 3, **caractérisée en ce que** la cage (3) et l'arbre (6) à pointes (7) sont équipés d'un dispositif (14, 15) d'entrainement en rotation individuel et **en ce que** lesdits dispositifs (14, 15) d'entrainement en rotation sont configurés pour permettre un entrainement en rotation de l'arbre (6) à pointes (7) à une vitesse supérieure à la vitesse de rotation de la cage (3).

5. Machine (1) à égrapper le raisin selon l'une des revendications 1 à 4, **caractérisée en ce qu'**elle comprend, côté ouverture (8) d'admission de raisin de la cage (3), un dispositif (16) de chargement de raisin dans ladite cage (3).

6. Machine (1) à égrapper le raisin selon la revendication 5, **caractérisée en ce que** le dispositif (16) de chargement de raisin dans la cage (3) comprend une trémie (161) ouverte par le dessus, ladite trémie (161) présentant deux flancs (171, 172) formant un V entre eux, lesdits flancs (171, 172) étant, en configuration d'utilisation de la machine (1), disposés de part et d'autre d'un plan vertical passant par l'axe (XX') de rotation de la cage (3), **en ce que** le déplacement de chaque déflecteur (12) est, au cours de la rotation de la cage (3) sur un tour, divisé en un déplacement descendant à l'intérieur d'un premier secteur angulaire puis un déplacement ascendant à l'intérieur d'un deuxième secteur angulaire, et **en ce que** l'un (171) des flancs (171, 172) de la paire de flancs en V, disposé côté deuxième secteur angulaire, présente une pente supérieure à l'autre (172) des flancs (171, 172) de la paire de flancs en V disposé côté premier secteur angulaire, le débouché (18) de la trémie (161) dans l'ouverture (8) d'admission de raisin de la cage (3) étant ménagé dans un flanc (173) de la trémie (161) reliant lesdits flancs (171, 172) en V entre eux.

7. Machine (1) à égrapper le raisin selon l'une des revendication 1 à 6, **caractérisée en ce que** la paroi (4) perforée de la cage (3) est munie extérieurement d'un enroulement (19) hélicoïdal formant une hélice apte à entrainer en déplacement les baies de raisin issues de la cage (3) vers l'ouverture (8) d'admission de raisin de la cage (3).

8. Machine (1) à égrapper le raisin selon l'une des revendications 1 à 7, **caractérisée en ce que** le bâti (2), qui entoure au moins partiellement la cage (3), forme, à l'aplomb et au-dessous de la cage (3), un fond (20) de réception des baies de raisin, une ouverture (21) de déchargement des baies de raisin à l'extérieur du bâti (2) étant ménagée dans ledit fond (20).

9. Machine (1) à égrapper le raisin selon la revendication 8, **caractérisée en ce que** l'ouverture (21) de déchargement des baies de raisin à l'extérieur du bâti (2) est réglable en dimension.

10. Machine (1) à égrapper le raisin selon l'une des revendications 1 à 9, **caractérisée en ce que** l'ouverture (9) de sortie des rafles de la cage (3), disposée à l'extrémité de la cage (3) opposée à celle munie de l'ouverture (8) d'admission du raisin à l'intérieur de la cage (3), débouche dans une chambre (22) ménagée par le bâti (2), cette chambre (22) étant munie d'une ouverture (23) de déchargement des rafles.

## Patentansprüche

1. Maschine (1) zum Entrappen von Trauben, umfassend ein Maschinengestell (2), ein Gehäuse (3) mit perforierter Wand (4) auf mindestens einem Teil ihrer Länge, wobei die Perforationen (5) der Wand (4) ausgelegt sind, um die Traubenbeeren durchzulassen und mindestens einen Teil der Rappen zurückzuhalten, und eine Welle (6) mit Spitzen (7), wobei das Gehäuse (3) ein drehendes Gehäuse ist, das die Form eines verlängerten hohlen Körpers aufweist, der drehend um eine Längsachse (XX') des Körpers montiert ist, wobei dieses Gehäuse (3) ein offenes Ende aufweist, das eine Öffnung (8) zum Zugang von Trauben in das Innere des Gehäuses (3) bildet, und eine Öffnung (9), bezeichnet als Ausgang der entrappten Rappen, die am gegenüberliegenden Ende des Gehäuses (3) angebracht ist, und wobei die Welle (6) mit Spitzen (7) eine drehende Welle ist, die im Inneren des Gehäuses (3) auf koaxiale oder parallele Weise zur Drehachse (XX') des Gehäuses (2) angeordnet ist, **dadurch gekennzeichnet, dass** die Welle (6) mit Spitzen (7) von ihrem Ende, das auf der Seite der Öffnung (8) zum Zugang von Trauben des Gehäuses (3) angeordnet ist, hin zu ihrem Ende, das auf der Seite der Öffnung (9) zum Ausgang der Rappen vom Gehäuse (3) angeordnet ist, mindestens einen Bereich (10) ohne Spitzen (7), gefolgt von einem Bereich (11) mit Spitzen (7), umfasst, und dadurch, dass das Gehäuse (3) im Innern mit Umleitern (12) ausgestattet ist, die fest in der Verschiebung mit der perforierten Wand (4) zur teilweisen Begrenzung des Gehäuses (3) verbunden sind, wobei mindestens ein Teil der Umleiter (12) um den Bereich (10) ohne Spitzen der Welle (6) mit Spitzen (7) angeordnet ist.

2. Maschine zum Entrappen von Trauben nach Anspruch 1, **dadurch gekennzeichnet, dass** die perforierte Wand (4) des Gehäuses (3), die den Bereich (11) mit Spitzen der Welle (6) mit Spitzen umgibt, im Innern keine Umleiter (12) oder vorspringende Teile aufweist, die ausgelegt sind, um ein Verschiebungs-Antriebsmittel der Traube zu bilden.

3. Maschine (1) zum Entrappen von Trauben nach einem der Ansprüche 1 oder 2, **dadurch gekennzeichnet, dass** die Spitzen (7) der Welle (6) mit Spitzen (7) schraubenförmig auf der Welle (6) angeordnet sind und vorzugsweise ein abgeflachtes freies Ende (13) aufweisen.

4. Maschine (1) zum Entrappen von Trauben nach einem der Ansprüche 1 bis 3, **dadurch gekennzeichnet, dass** das Gehäuse (3) und die Welle (6) mit Spitzen (7) mit einer individuellen Vorrichtung (14, 15) zum Drehantrieb ausgestattet sind, und dadurch, dass die Vorrichtungen (14, 15) zum Drehantrieb konfiguriert sind, um einen Drehantrieb der Welle (6) mit Spitzen (7) mit einer Geschwindigkeit von mehr als der Drehgeschwindigkeit des Gehäuses (3) zu ermöglichen.

5. Maschine (1) zum Entrappen von Trauben nach einem der Ansprüche 1 bis 4, **dadurch gekennzeichnet, dass** sie auf der Seite der Öffnung (8) des Zugangs von Trauben des Gehäuses (3) eine Vorrichtung (16) zum Laden von Trauben in das Gehäuse (3) umfasst.

6. Maschine (1) zum Entrappen von Trauben nach Anspruch 5, **dadurch gekennzeichnet, dass** die Vorrichtung (16) zum Laden von Trauben in das Gehäuse (3) einen von oben geöffneten Trichter (161) umfasst, wobei der Trichter (161) zwei Flanken (171, 172) aufweist, die zwischen sich ein V bilden, wobei die Flanken (171, 172) in der Verwendungskonfiguration der Maschine (1) auf beiden Seiten einer vertikalen Ebene angeordnet sind, die durch die Drehachse (XX') des Gehäuses (3) verläuft, dadurch, dass die Verschiebung jedes Umleiters (12) im Laufe der Drehung des Gehäuses (3) auf einem Umlauf, in eine absteigende Verschiebung im Inneren eines ersten Winkelsektors, dann in eine aufsteigende Verschiebung im Innern eines zweiten Winkelsektors unterteilt ist, und dadurch, dass eine (171) der Flanken (171, 172) des Paars von V-förmigen Flanken, die auf der Seite des zweiten Winkelsektors angeordnet ist, eine stärkere Neigung als die andere (172) der Flanken (171, 172) des Paars von V-förmigen Flanken, die auf der Seite des ersten Winkelsektors angeordnet ist, aufweist, wobei die Mündung (18) des Trichters (161) in die Öffnung (8) zum Zugang von Trauben des Gehäuse (3) in einer Flanke (173) des Trichters (161) angebracht ist, die die V-förmigen Flanken (171, 172) untereinander verbindet.

7. Maschine (1) zum Entrappen von Trauben nach einem der Ansprüche 1 bis 6, **dadurch gekennzeichnet, dass** die perforierte Wand (4) des Gehäuses (3) außen mit einer schraubenförmigen Wicklung (19) ausgestattet ist, die eine Schraube bildet, die ausgelegt ist, um die Traubenbeeren, die aus dem Gehäuse (3) stammen, hin zur Öffnung (8) zum Zugang der Trauben des Gehäuses (3) zu verschieben.

8. Maschine (1) zum Entrappen von Trauben nach einem der Ansprüche 1 bis 7, **dadurch gekennzeichnet, dass** das Gestell (2), das mindestens teilweise das Gehäuse (3) umgibt, senkrecht zu und unter dem Gehäuse (3) einen Boden (20) zur Aufnahme der Traubenbeeren bildet, wobei eine Öffnung (21) zur Entladung der Traubenbeeren außerhalb des Gestells (2) im Boden (20) angebracht ist.

9. Maschine (1) zum Entrappen von Trauben nach Anspruch 8, **dadurch gekennzeichnet, dass** die Öffnung (21) zur Entladung der Traubenbeeren außerhalb des Gestells (2) in der Abmessung regulierbar ist.

10. Maschine (1) zum Entrappen von Trauben nach einem der Ansprüche 1 bis 9, **dadurch gekennzeichnet, dass** die Öffnung (9) zum Ausgang der Rappen vom Gehäuse (3), die am Ende des Gehäuses (3) gegenüber derjenigen angeordnet ist, die mit der Öffnung (8) zum Zugang der Traubein in das Innere des Gehäuses (3) ausgestattet ist, in eine Kammer (22) mündet, die durch das Gestell (2) angebracht ist, wobei diese Kammer (22) mit einer Öffnung (23) zur Entladung der Rappen ausgestattet ist.

## Claims

1. A machine (1) for de-stemming grapes comprising a machine frame (2), a cage (3) with perforated wall (4) on at least part of its length with the perforations (5) of the wall (4) able to allow the grape berries to pass and to retain at least part of the stalks, and a shaft (6) with tips (7), said cage (3) being a rotary cage assuming the form of an elongated hollow body mounted rotating about a longitudinal axis (XX') of said body, this cage (3) having an open end forming the grape inlet opening (8) inside the cage (3) and a so-called outlet opening (9) of the destemmed stalks arranged at the opposite end of the cage (3), and the shaft (6) with points (7) being a rotary shaft arranged inside the cage (3), in a manner coaxial or parallel to the axis (XX') of rotation of the cage (3), **characterized in that** the shaft (6) with points (7) has, from its end arranged on the grape inlet opening side (8) of the cage (3) toward its end arranged on the outlet opening side (9) for the stalks of the cage (3), at least one zone (10) without points (7) followed by a zone (11) with points (7), and **in that** the cage (3) is inwardly equipped with deflectors (12) secured in movement with the perforated wall (4) partially delimiting the cage (3), at least part of said deflectors (12) being arranged around the zone (10) without points of the shaft (6) with points (7).

2. The machine (1) for de-stemming grapes according to claim 1, **characterized in that** the perforated wall (4) of the cage (3) surrounding the zone (11) with points of the shaft (6) with points is inwardly devoid of deflectors (12) or protruding parts able to form a means for driving the movement of the grape.

3. The machine (1) for de-stemming grapes according to one of claims 1 or 2, **characterized in that** the points (7) of the shaft (6) with points (7) are arranged in a helix on the shaft (6) and preferably have a flattened free end (13).

4. The machine (1) for de-stemming grapes according to one of claims 1 to 3, **characterized in that** the cage (3) and the shaft (6) with points (7) are equipped with a device (14, 15) for individual rotational driving and **in that** said rotational driving devices (14, 15) are configured to allow a rotational driving of the shaft (6) with points (7) at a speed greater than the rotation speed of the cage (3).

5. The machine (1) for de-stemming grapes according to one of claims 1 to 4, **characterized in that** it comprises, on the side of the grape inlet opening (8) of the cage (3), a device (16) for loading grapes into said cage (3).

6. The machine (1) for de-stemming grapes according to claim 5, **characterized in that** the device (16) for loading grapes into the cage (3) comprises a hopper (161) open from above, said hopper (161) having two flanks (171, 172) forming a V between them, said flanks (171, 172) being, in the usage configuration of the machine (1), arranged on either side of a vertical plane passing through the axis (XX') of rotation of the cage (3), **in that** the movement of each deflector (12) is, during the rotation of the cage (3) over one revolution, divided into a downward movement inside a first angular sector, then an upward movement inside a second angular sector, and **in that** one (171) of the flanks (171, 172) of the V-shaped pair of flanks, arranged on the side of the second angular sector, has a slope greater than the other (172) of the flanks (171, 172) of the V-shaped pair of flanks arranged on the side of the first angular sector, the mouth (18) of the hopper (161) in the grape inlet opening (8) of the cage (3) being arranged in a flank (173) of the hopper (161) connecting said V-shaped flanks (171, 172) to one another.

7. The machine (1) for de-stemming grapes according to one of claims 1 to 6, **characterized in that** the perforated wall (4) of the cage (3) is outwardly provided with a helical winding (19) forming a helix able to move the grape berries coming from the cage (3) toward the grape inlet opening (8) of the cage (3).

8. The machine (1) for de-stemming grapes according to one of claims 1 to 7, **characterized in that** the frame (2), which at least partially surrounds the cage (3), forms, overhanging and below the cage (3), a bottom (20) for receiving grape berries, an opening (21) for unloading grape berries to the outside of the frame (2) being arranged in said bottom (20).

9. The machine (1) for de-stemming grapes according to claim 8, **characterized in that** the opening (21) for unloading grape berries to the outside of the frame (2) is adjustable in terms of dimensions.

10. The machine (1) for de-stemming grapes according to one of claims 1 to 9, **characterized in that** the stalk outlet opening (9) of the cage (3), arranged at the end of the cage (3) opposite that bearing the grape inlet opening (8) to the inside of the cage (3), emerges in a chamber (22) arranged through the frame (2), this chamber (22) being provided with an opening (23) for unloading stalks.
